(19) Europäisches Patentamt
European Patent Office
Office européen des brevets

(11) **EP 4 261 250 A1**

(12) **EUROPEAN PATENT APPLICATION**
published in accordance with Art. 153(4) EPC

(43) Date of publication:
**18.10.2023 Bulletin 2023/42**

(21) Application number: **21903431.1**

(22) Date of filing: **08.12.2021**

(51) International Patent Classification (IPC):
**C08K 7/04** (2006.01)     **C08L 67/02** (2006.01)
**C08L 101/00** (2006.01)     **C08L 63/00** (2006.01)

(52) Cooperative Patent Classification (CPC):
**C08K 7/04; C08L 63/00; C08L 67/02; C08L 101/00**

(86) International application number:
**PCT/JP2021/045107**

(87) International publication number:
**WO 2022/124332 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.12.2020 JP 2020204357**

(71) Applicants:
• **Mitsubishi Chemical Corporation**
**Chiyoda-ku**
**Tokyo 100-8251 (JP)**
• **Shinryo Corporation**
**Kitakyushu-shi, Fukuoka, 806-0021 (JP)**

(72) Inventors:
• **TAKASHIMA Shoichi**
**Hiratsuka-shi, Kanagawa 254-0016 (JP)**
• **MUTO Fumihiro**
**Hiratsuka-shi, Kanagawa 254-0016 (JP)**
• **SUZUKI Takayuki**
**Hiratsuka-shi, Kanagawa 254-0016 (JP)**
• **ARITA Hiroyuki**
**Kitakyushu-shi, Fukuoka 806-0021 (JP)**

(74) Representative: **Hoffmann Eitle**
**Patent- und Rechtsanwälte PartmbB**
**Arabellastraße 30**
**81925 München (DE)**

(54) **RESIN COMPOSITION, PELLET, MOLDED ARTICLE AND METHOD FOR PRODUCING RESIN COMPOSITION**

(57)     Provided is a resin composition contains, with respect to 100 parts by mass of a thermoplastic resin, 10 to 70 parts by mass of a recycled carbon fiber; and 0.1 to 15 parts by mass of a functional group-containing compound; wherein the recycled carbon fiber is a baked product of a composite of an epoxy resin and a carbon fiber, and comprises 5% by mass or more of a residue derived from the epoxy resin; and an ISO multi-purpose test specimen with a thickness of 4 mm obtained by molding the resin composition has a maximum flexural strength of 130 MPa or more in accordance with ISO 178.

EP 4 261 250 A1

**Description**

[Technical Field]

The present invention relates to a resin composition, a pellet and a molded article, and a process for producing the resin composition. The present invention particularly relates to a resin composition obtained by using a thermoplastic resin and a recycled carbon fiber.

[Background Art]

Thermoplastic resins have been widely used for components of various devices. In particular, reinforcing fibers have been widely used in order to enhance mechanical strength of molded articles to be formed from thermoplastic resins. One of representative examples of such reinforcing fibers is a carbon fiber. As such an example, the carbon fiber described in Patent Literature 1 is known.

From the viewpoint of effective utilization of limited resources, the reuse of carbon fibers has also been investigated. As recycled carbon fibers, for example, those described in Patent Literatures 2 and 3 are known.

[Citation List]

[Patent Literature]

[Patent Literature 1]
Japanese Patent Laid-Open No. 51-109056
[Patent Literature 2]
Japanese Patent Laid-Open No. 2016-041800
[Patent Literature 3]
International Publication No. WO 2018/212016

[Summary of Invention]

[Technical Problem]

However, a thermoplastic resin having a recycled carbon fiber blended therein is inferior in mechanical strength to a thermoplastic resin having a newly produced carbon fiber, that is, a virgin carbon fiber blended therein. In addition, it has been found that when the thermoplastic resin and the recycled carbon fiber are used, they cannot be melt kneaded well, resulting in inferior productivity.

An object of the present invention is to solve such problems by improving the mechanical strength of a resin composition obtained by using a thermoplastic resin and a recycled carbon fiber and further making it excellent in productivity. Another object of the present invention is to provide a pellet and a molded article formed from the resin composition, and a process for producing the resin composition.

[Solution to Problem]

The present inventors conducted research to address the above-mentioned problems, and as a result, the above problems are solved by blending the thermoplastic resin, the recycled carbon fiber and a functional group-containing compound and further using thing that comprises a residue derived from an epoxy resin as a recycled carbon fiber.

Specifically, the problems described above are solved by the following means.

<1> A resin composition comprising, with respect to 100 parts by mass of a thermoplastic resin,

10 to 70 parts by mass of a recycled carbon fiber; and
0.1 to 15 parts by mass of a functional group-containing compound;
wherein the recycled carbon fiber is a baked product of a composite of an epoxy resin and a carbon fiber, and comprises 5% by mass or more of a residue derived from the epoxy resin; and
an ISO multi-purpose test specimen with a thickness of 4 mm obtained by molding the resin composition has a maximum flexural strength of 130 MPa or more in accordance with ISO 178.

<2> The resin composition according to <1>, wherein the content of the functional group-containing compound is 0.1 to 5 parts by mass with respect to 100 parts by mass of the thermoplastic resin.

<3> The resin composition according to <1> or <2>, wherein the recycled carbon fiber is a baked product of a composite of an epoxy resin and a carbon fiber, and comprises 10% by mass or more of a residue derived from the epoxy resin.

<4> The resin composition according to <1>,

wherein the content of the functional group-containing compound is 0.1 to 5 parts by mass with respect to 100 parts by mass of the thermoplastic resin;

the recycled carbon fiber is a baked product of a composite of an epoxy resin and a carbon fiber, and comprises 10% by mass or more of a residue derived from the epoxy resin; and

an ISO multi-purpose test specimen with a thickness of 4 mm obtained by molding the resin composition has a maximum flexural strength of 170 MPa or more in accordance with ISO 178.

<5> The resin composition according to any one of <1> to <4>, wherein the recycled carbon fiber comprises no less than 5% by mass and no more than 30% by mass of a residue derived from the epoxy resin.

<6> The resin composition according to any one of <1> to <5>, wherein the thermoplastic resin comprises at least one selected from the group consisting of a polyester resin, a polycarbonate resin and a styrenic resin.

<7> The resin composition according to any one of <1> to <6>, wherein the thermoplastic resin comprises a polybutylene terephthalate resin.

<8> The resin composition according to any one of <1> to <7>, wherein 30 to 100% by mass of the thermoplastic resin is a polybutylene terephthalate resin.

<9> The resin composition according to any one of <1> to <8>, wherein the functional group-containing compound comprises at least one selected from the group consisting of an epoxy group-containing compound, a carbodiimide compound, an oxazoline group-containing compound, an oxazine group-containing compound, a carboxy group-containing compound and an amide group-containing compound.

<10> The resin composition according to any one of <1> to <9>, wherein the functional group-containing compound comprises an epoxy group-containing compound.

<11> The resin composition according to any one of <1> to <10>, wherein the functional group-containing compound has a ratio of [weight-average molecular weight]/[functional group equivalent (unit of functional group equivalent: g/eq)] is 1 to 30.

<12> The resin composition according to any one of <1> to <11>, wherein the functional group-containing compound has a ratio of [weight-average molecular weight]/[functional group equivalent (unit of functional group equivalent: g/eq)] is 1 to 10.

<13> The resin composition according to any one of <1> to <12>, wherein the recycled carbon fiber comprises 25% by mass or less of a residue derived from the epoxy resin.

<14> A pellet formed from the resin composition according to any one of <1> to <13>.

<15> The pellet according to <14>, wherein the number-average fiber length of the recycled carbon fiber in the pellet is 100 to 500 μm.

<16> A molded article formed from the resin composition according to any one of <1> to <13> or the pellet according to claim <14> or <15>.

<17> The molded article according to <16>, which is an injection-molded article.

<18> The molded article according to <17>, wherein the number-average fiber length of the recycled carbon fiber in the molded article is 100 to 500 μm.

<19> The molded article according to any one of <16> to <18>, which is a component of automotive chassis.

<20> A process for producing a resin composition comprising, with respect to 100 parts by mass of a thermoplastic resin:

10 to 70 parts by mass of a recycled carbon fiber; and

0.1 to 15 parts by mass of a functional group-containing compound;

wherein the recycled carbon fiber is a baked product of a composite of an epoxy resin and a carbon fiber, and comprises 5% by mass or more of a residue derived from the epoxy resin; and

wherein the process comprises feeding the recycled carbon fiber through a side feeder located in one place of a cylinder of an extruder.

<21> The process according to <20>, wherein the resin composition is a resin composition according to any one of <1> to <13>.

[Advantageous Effects of Invention]

The present invention has enabled to improve the resin composition obtained by using the thermoplastic resin and the recycled carbon fiber in mechanical strength and to further make it excellent in productivity. The present invention has been also able to provide a pellet and a molded article formed from the resin composition, and a process for producing the resin composition.

[Description of Embodiments]

Hereinafter, modes for carrying out the present invention (the mode for carrying out the present invention is hereinafter simply referred to as "the present embodiment") will be described in detail. The following embodiments are illustrations for describing the present invention and it is not intended to limit the present invention to only the present embodiments.

By the term "to" as used herein with respect to the numerical range, it is meant that the numerical values before and after "to" are included as the lower limit or the upper limit.

Various physical property values and characteristic values as described herein are values measured at 23°C, unless otherwise specified.

The resin composition of the present embodiment comprises, with respect to 100 parts by mass of a thermoplastic resin, 10 to 70 parts by mass of a recycled carbon fiber; and 0.1 to 15 parts by mass of a functional group-containing compound; and is characterized in that the recycled carbon fiber is a baked product of a composite of an epoxy resin and a carbon fiber, and comprises 5% by mass or more of a residue derived from the epoxy resin; and an ISO multi-purpose test specimen with a thickness of 4 mm obtained by molding the resin composition has a maximum flexural strength of 130 MPa or more in accordance with ISO 178.

The resin composition that is comprised in this manner can be improved in mechanical strength and productivity. In particular, since the recycled carbon fiber is used, the resin composition with reduced environmental load can be obtained.

The mechanism for improving the resin composition in mechanical strength and productivity is presumed to be as follows.

The recycled carbon fiber has undergone a baking process, so that it usually has no treatment agent deposited on the surface thereof. Therefore, it is presumed that the affinity between the recycled carbon fiber and the thermoplastic resin is low and the resulting resin composition is low in mechanical strength. In addition, the recycled carbon fiber has not only no treatment agent but also no sizing agent deposited on the surface thereof and the fibers thereby easily tangle with each other to flocculate, so that there has been a problem that it is difficult to charge materials via a feeder in melt kneading and the productivity is poor. In the present embodiment, presumably, by adding a functional group-containing compound during melt kneading, the compound functions as a surface treatment agent for the recycled carbon fiber and thereby improves the affinity of the recycled carbon fiber with the resin, resulting in an improvement in mechanical strength.

In addition, by using the recycled carbon fibers that have a certain amount or more of an epoxy resin-derived residue left on the surface thereof, the epoxy resin-derived residue acts as a sizing agent, resulting in an improvement in productivity. According to the present embodiment, adapting these technologies enable the recycled carbon fiber excellent in environmental suitability to be used and the resin composition excellent in mechanical strength and productivity to be provided.

The present embodiments will be described in detail below.

<Thermoplastic resin>

The resin composition of the present embodiment comprises a thermoplastic resin.

The thermoplastic resin is not specified in its type or the like, but preferred examples of the thermoplastic resin include a polyester resin (thermoplastic polyester resin) such as a polyethylene terephthalate resin, a polytrimethylene terephthalate resin or a polybutylene terephthalate resin; a polyamide resin; a polycarbonate resin; a styrenic resin; a polyolefin resin such as a polyethylene resin, a polypropylene resin or a cyclic cycloolefin resin; a polyacetal resin; a polyimide resin; a polyetherimide resin; a polyurethane resin; a polyphenylene ether resin; a polyphenylene sulfide resin; a polysulfone resin; and a polymethacrylate resin. The thermoplastic resin preferably comprises at least one selected from the group consisting of a polyester resin, a polycarbonate resin and a styrenic resin.

In one embodiment of the thermoplastic resin in the resin composition of the present embodiment, the thermoplastic resin comprises a polybutylene terephthalate. The content of the polybutylene terephthalate resin in the thermoplastic resin in the resin composition of the present embodiment is preferably 30 to 100% by mass.

In the first embodiment in the resin composition of the present embodiment, the percentage of the polybutylene terephthalate resin in the thermoplastic resin is preferably 60 to 100% by mass, more preferably 80 to 100% by mass, even more preferably 90 to 100% by mass, still more preferably 95 to 100% by mass, and further more preferably 98 to 100% by mass.

In another embodiment of the thermoplastic resin in the resin composition of the present embodiment, 30 to 100% by mass of the thermoplastic resin is a polybutylene terephthalate. In the present embodiment, the resin composition may comprise, as a thermoplastic resin, a polybutylene terephthalate alone or a mixture of the polybutylene terephthalate with one or more thermoplastic resins other than the polybutylene terephthalate (for example, with a polycarbonate resin, a polyethylene terephthalate resin and an AS resin, and preferably with a polyethylene terephthalate resin and an AS resin). In the present embodiment, the percentage of the polybutylene terephthalate in the thermoplastic resin is preferably 40 to 100% by mass.

The polyester resin is a polyester obtained by polycondensation of a dicarboxylic acid compound and a dihydroxy compound, polycondensation of an oxycarboxylic acid compound, or polycondensation of these compounds, or the like, and may be either a homopolyester or a copolyester.

As the dicarboxylic acid compound constituting the polyester resin, an aromatic dicarboxylic acid or an ester-forming derivative thereof is preferably used.

Examples of the aromatic carboxylic acid include terephthalic acid, isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, diphenyl ether-4,4'-dicarboxylic acid, diphenylmethane-4,4'-dicarboxylic acid, diphenylsulfone-4,4'-dicarboxylic acid, diphenylisopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-terphenylene-4,4'-dicarboxylic acid and pyridine-2,5-dicarboxylic acid. Terephthalic acid can be preferably used.

These aromatic dicarboxylic acids may be used alone or in combination of two or more thereof. As is well known, these can be used in a polycondensation reaction not only as a free acid but also as an ester-forming derivative thereof such as a dimethyl ester thereof.

In addition, one or more selected from the group consisting of an aliphatic dicarboxylic acid such as adipic acid, azelaic acid, dodecanedioic acid or sebacic acid, and an alicyclic dicarboxylic acid such as 1,2-cyclohexane dicarboxylic acid, 1,3-cyclohexane dicarboxylic acid or 1,4-cyclohexane dicarboxylic acid, if in a small amount, can be used by mixing it with such an aromatic dicarboxylic acid.

Examples of the dihydroxy compound constituting the thermoplastic polyester resin include an aliphatic diol such as ethylene glycol, propylene glycol, butanediol, hexylene glycol, neopentyl glycol, 2-methylpropane-1,3-diol, diethylene glycol or triethylene glycol; an aliphatic diol such as cyclohexane-1,4-dimethanol; and mixtures thereof. One or more long-chain diols having a molecular weight of 400 to 6,000, such as polyethylene glycol, poly-1,3-propylene glycol or polytetramethylene glycol, if in a small amount, may be copolymerized therewith.

An aromatic diol such as hydroquinone, resorcinol, naphthalenediol, dihydroxydiphenyl ether or 2,2-bis(4-hydroxyphenyl)propane can be also used.

In addition to the above bifunctional monomers, a trifunctional monomer such as trimellitic acid, trimesic acid, pyromellitic acid, pentaerythritol or trimethylolpropane for introducing a branched structure, and/or a monofunctional compound such as a fatty acid for molecular weight adjustment can be also used in a small amount in combination.

The polyester resin to be used is usually mainly composed of a polycondensate of a dicarboxylic aid and a diol, that is, it is usually composed of 50% by mass, preferably 70% by mass or more of this polycondensate based on the total content of the polyester resin. The dicarboxylic acid is preferably an aromatic carboxylic acid, and the diol is preferably an aliphatic diol.

Among them, the polyester resin is preferably a polyalkylene terephthalate resin in which 95 mol% or more of the acid component is comprised of terephthalic acid and 95% by mass or more of the alcohol component is comprised of an aliphatic diol. Typical examples of the polyalkylene terephthalate resin include a polybutylene terephthalate resin and a polyethylene terephthalate resin. The polybutylene terephthalate resin or the polyethylene terephthalate resin is preferably one close to a homopolyester, i.e., 95% by mass or more of the resin is comprised of a terephthalic acid component and 1,4-butanediol or ethylene glycol component.

In the present embodiment, the thermoplastic polyester resin preferably comprises, as a main component, a polyethylene terephthalate resin or a polybutylene terephthalate resin and more preferably a polybutylene terephthalate resin.

In addition, the thermoplastic polyester resin also preferably has isophthalic acid, a dimer acid or a polyalkylene glycol, such as polytetramethylene glycol (PTMG), copolymerized. Such a copolymer refers to a copolymer that has a copolymerization rate of 1 mol% or more and less than 50 mol% with respect to all segments of polybuthylene terephthalate. In particular, the copolymerization rate is preferably 2 to 50 mol%, more preferably 3 to 40 mol%, and particularly preferably 5 to 30 mol%.

The intrinsic viscosity of the polyester resin is preferably 0.5 to 2 dL/g. From the viewpoint of moldability and mechanical properties, the polyester resin more preferably has an intrinsic viscosity in the range of 0.6 to 1.5 dL/g. Using a polyester resin having an intrinsic viscosity of 0.5 dL/g or more tends to further improve a molded article of the resin composition comprising the polyester resin in mechanical strength. In contrast, using a polyester resin having an intrinsic viscosity of 2 dL/g or less tends to improve the resin composition in flowability and thereby moldability. The intrinsic viscosity of the polyester resin is measured at 30°C in a mixed solvent of tetrachloroethane and phenol at a mass ratio of 1:1.

The acid value (AV) of the polyester resin is preferably 1 to 50 eq/t. When the acid value is in such a range, the resin composition excellent in hydrolysis resistance, thermal stability or the like can be obtained. The acid value was determined by dissolving 0.5 g of the polyester resin in 25 mL of benzyl alcohol and titrating it with a 0.01 mol/L solution of sodium hydroxide in benzyl alcohol. The indicator to be used can be 0.10 g of phenolphthalein dissolved in a mixture of 50 mL of ethanol and 50 mL of water.

The polycarbonate resin will be then described.

The polycarbonate resin is a polymer or copolymer, which may be branched, obtained by reacting a dihydroxy compound or a dihydroxy compound and a small amount of a polyhydroxy compound with phosgene or a carboxylic acid diester. The process for producing the polycarbonate resin is not particularly limited, and the polycarbonate resin to be used may be one produced by a phosgene process (interfacial polymerization process) or melting process (transesterification process) as conventionally known.

The dihydroxy compound as a raw material is preferably an aromatic dihydroxy compound and include 2,2-bis(4-hydroxyphenyl)propane (i.e., bisphenol A), tetramethyl bisphenol A, bis(4-hydroxyphenyl)-p-diisopropylbenzene, hydroquinone, resorcinol and 4,4-dihydroxydiphenyl, and bisphenol A is preferred. The above aromatic dihydroxy compound having one or more tetraalkylphosphonium sulfonate molecules attached thereto can be also used.

Among the above-described polycarbonate resins, preferred is an aromatic polycarbonate resin derived from 2,2-bis(4-hydroxyphenyl)propane, or an aromatic polycarbonate copolymer derived from 2,2-bis(4-hydroxyphenyl)propane and another aromatic dihydroxy compound. The copolymer may be also a copolymer that is mainly composed of an aromatic polycarbonate, such as a copolymer of the aromatic polycarbonate therewith of a polymer or oligomer having a siloxane structure. Two or more of the above-described polycarbonate resins may be also mixed and used.

A monohydric aromatic hydroxy compound may be used to control the molecular weight of the polycarbonate resin. Examples of the monohydric aromatic hydroxy compound include m- and p-methylphenol, m- and p-propylphenol, p-tert-butylphenol and a p-long chain alkyl-substituted phenol.

The viscosity-average molecular weight (Mv) of the polycarbonate resin is preferably 20,000 or more, more preferably 23,000 or more, and even more preferably 25,000 or more. Using the polycarbonate resin having a viscosity-average molecular weight of 20,000 or more tends to further improve the resulting resin composition in mechanical strength. In addition, the viscosity-average molecular weight is preferably 60,000 or less, more preferably 40,000 or less, and even more preferably 35,000 or less. Using a polyester resin having a viscosity-average molecular weight of 60,000 or less tends to improve the resin composition in flowability and thereby moldability.

In the present invention, the viscosity-average molecular weight (Mv) of the polycarbonate resin refers to a value obtained by measuring the viscosity of a solution of the polycarbonate resin in methylene chloride at 20°C with an Ubbelohde viscometer to determine the intrinsic viscosity ($[\eta]$) and then performing calculation from the value of the viscosity according to the following Schnell viscosity formula.

$$[\eta] = 1.23 \times 10^{-4} Mv^{0.83}$$

The process for producing the polycarbonate resin is not particularly limited, and the polycarbonate resin to be used may be either one produced by a phosgene process (interfacial polymerization process) or one produced by a melting process (transesterification process). Also preferred is a polycarbonate resin prepared by subjecting a polycarbonate resin produced by a melting process to a post-treatment for adjusting the amount of terminal OH groups.

The styrenic resin will be then described.

Examples of the styrenic resin include a homopolymer of a styrenic monomer and a copolymer of a styrenic monomer and another copolymerizable monomer.

More specific examples of the styrenic resin include a polystyrene resin, an acrylonitrile-styrene copolymer (AS resin), a high-impact polystyrene resin (HIPS); and a resin such as an acrylonitrile-butadiene-styrene copolymer (ABS resin), an acrylonitrile-acrylic rubber-styrene copolymer (AAS resin), an acrylonitrile-styrene-acrylic rubber copolymer (ASA resin), an acrylonitrile-ethylene propylene-based rubber-styrene copolymer (AES resin) or a styrene-IPN type rubber copolymer. Among them, an acrylonitrile-styrene copolymer (AS resin), a high-impact polystyrene resin (HIPS) and an acrylonitrile-butadiene-styrene copolymer (ABS resins) are preferred; an acrylonitrile-styrene copolymer (AS resin) and a high impact polystyrene resin (HIPS) are more preferred; and an acrylonitrile-styrene copolymer (AS resin) are even more preferred.

When the styrenic resin comprises a rubber component, the content of the rubber component in the styrenic resin is preferably 3 to 70% by mass, more preferably 5 to 50% by mass, and even more preferably 7 to 30% by mass. When the content of the rubber component is 3% by mass or more, the impact resistance tends to be improved, whereas when it is 50% by mass or less, the flame retardancy tends to be improved, and the content of 3% by mass or more and 50% by mass or less is thus preferred. In addition, the average particle size of the rubber component is preferably 0.05 to 10 $\mu$m, more preferably 0.1 to 6 $\mu$m, and even more preferably 0.2 to 3 $\mu$m. When the average particle size of the rubber component is 0.05 $\mu$m or more, the impact resistance tends to be improved, whereas when it is 10 $\mu$m or less, the appearance tends to be improved, and the average particle size of 0.05 $\mu$m or more and 10 $\mu$m or less is thus preferred.

The weight-average molecular weight of the styrenic resin is usually 50,000 or more, preferably 100,000 or more and more preferably 150,000 or more, and usually 500,000 or less, preferably 400,000 or less and more preferably 300,000 or less. The number-average molecular weight of the styrenic resin is usually 10,000 or more, preferably 30,000 or more and more preferably 50,000 or more, and usually 300,000 or less, preferably 200,000 or less and more preferably 150,000 or less. The use of such a styrenic resin is preferred, because it tends to easily improve the impact resistance.

The melt flow rate (MFR) of the styrenic resin as measured in accordance with JIS K7210 (at a temperature of 200°C under a load of 5 kgf) is preferably 0.1 to 30 g/10 min, and more preferably 0.5 to 25 g/10 min. When the MFR is 0.1 g/10 min or more, the flowability tends to be improved, whereas when it is 30 g/10 min or less, the impact resistance tends to be improved, and the MFR of 0.1 g/10 min or more and 30 g/10 min or less is thus preferred.

Examples of the process for producing such a styrenic resin include known processes such as emulsion polymerization, solution polymerization, suspension polymerization and bulk polymerization.

The content of the thermoplastic resin in the resin composition of the present embodiment is preferably 60% by mass or more, more preferably 70% by mass or more, even more preferably 75% by mass or more, and still more preferably 80% by mass or more.

The resin composition of the present embodiment may comprise only one thermoplastic resin or two or more thermoplastic resins. When the resin composition comprises two or more thermoplastic resins, the total content is preferably within the above range.

<Recycled carbon fiber>

The resin composition of the present embodiment comprises 10 to 70 parts by mass of the thermoplastic resin with respect to 100 parts by mass. In the resin composition of the present embodiment, the recycled carbon fiber is a baked product of a composite of an epoxy resin and a carbon fiber, and comprises 5% by mass or more of a residue derived from the epoxy resin. When such a recycled carbon fiber is used, it is possible to obtain a thermoplastic resin composition that is excellent in environmental suitability and good in various properties, such as mechanical strength, and productivity.

The recycled carbon fiber used herein refers to a carbon fiber recovered from scraps of used carbon fiber-reinforced resins (for example, derived from aircraft, vehicles, electrical or electronic devices or the like) and intermediate products (prepregs) of carbon fiber-reinforced resins generated from the producing process of carbon fiber-reinforced resins, and the like. In contrast, the virgin carbon fiber used herein is generally a new carbon fiber that is not a recycled carbon fiber, such as those sold as a carbon fiber.

The type of carbon fiber is not particularly specified, but a PAN-based carbon fiber is preferred.

The number-average fiber diameter of the recycled carbon fiber is more preferably 3 $\mu$m or more and even preferably 4 $\mu$m or more. In addition, it is preferably 10 $\mu$m or less and more preferably 8 $\mu$m or less. When the number-average fiber diameter of the recycled carbon fiber is within such a range, it is easier to obtain a resin composition further improved in mechanical properties.

In the present embodiment, the recycled carbon fiber comprises an epoxy resin-derived residue at a percentage of 5% by mass or more, preferably 8% by mass or more, more preferably 10% by mass or more, and even more preferably 12% by mass or more. When the percentage of the epoxy resin-derived residue is the lower limit or more, the effect as a sizing agent for carbon fibers is presumed to be effectively exhibited. In addition, the recycled carbon fiber preferably comprises an epoxy resin-derived residue preferably at a percentage of 30% by mass or less, more preferably 25% by mass or less, even more preferably 22% by mass or less, and 19% by mass and still more preferably 16% by mass or less, and the percentage of the epoxy resin-derived residue may be 14% by mass or less. When the percentage of the epoxy resin-derived residue is the upper limit or less, the effect of improving productivity is easily obtained while minimizing the reduction in mechanical strength due to the epoxy resin-derived residue.

The above epoxy resin may optionally comprise an additive(s). Examples of the additive include a curing agent, a curing aid, an internal release agent, a flame retardant, an antioxidant, a light stabilizer, a UV absorber and a colorant.

The recycled carbon fiber to be used in the present embodiment can be obtained by baking a composite of an epoxy resin and a carbon fiber. The amount of an epoxy resin-derived residue is achieved by baking in a continuous incinerator, baking in a nitrogen atmosphere and/or baking at a predetermined temperature, and the like. For example, reference can be made to the description in International Publication No. WO 2018-212016, the content of which is incorporated herein.

The content of the recycled carbon fiber in the present embodiment is 10 parts by mass or more, preferably 11 parts by mass or more, and more preferably 12 parts by mass or more, with respect to 100 parts by mass of the thermoplastic resin. It may be 15 parts by mass or more, 20 parts by mass or more, or 25 parts by mass or more, depending on the application or the like. When the content is the above lower limit or more, a good effect of improving the strength and an effect of improving the electromagnetic shielding performance can be obtained. In addition, the content of the recycled carbon fiber in the present embodiment is 70 parts by mass or less, preferably 60 parts by mass or less, more preferably 50 parts by mass or less, even more preferably 40 parts by mass or less and still more preferably 35 parts by mass or less, with respect to 100 parts by mass of the thermoplastic resin. It may be 25 parts by mass or less, 20 parts by mass or less, 17 parts by mass or less, or 16 parts by mass or less depending on the application or the like. When the content is the above upper limit or less, flowability is excellent and a molded article better in appearance and smoothness can be obtained.

The composition of the present embodiment preferably comprises a recycled carbon fiber at a percentage of 5 to 40% by mass in terms of the substantial amount of carbon fiber in the composition.

The resin composition of the present embodiment may comprise only one recycled carbon fiber or two or more recycled carbon fibers. When the resin composition comprises two or more recycled carbon fibers, the total content is preferably within the above range.

The composition of the present embodiment may or may not comprise a virgin carbon fiber. One example of the composition of the present embodiment is an aspect which comprises a virgin carbon fiber at a percentage of 5 to 50% by mass (preferably 5 to 30% by mass) of the content of a recycled carbon fiber. Another example of the composition of the present embodiment is a composition that comprises a virgin carbon fiber at a percentage less than 5% by mass (preferably less than 3% by mass, more preferably less than 1% by mass) of the content of a recycled carbon fiber.

<Functional group-containing compound>

The resin composition of the present embodiment comprises 0.1 to 15 parts by mass of a functional group-containing compound with respect to 100 parts by mass of the thermoplastic resin. Unlike the virgin carbon fiber, the recycled carbon fiber does not have a surface treatment agent deposited thereon. Therefore, it has been presumed to be inferior in mechanical strength. According to the present embodiment, the functional group-containing compound is presumed to serve in place of the surface treatment agent and improve its mechanical strength.

The functional group-containing compound to be used in the present embodiment preferably comprises at least one selected from the group consisting of an epoxy group-containing compound, a carbodiimide compound, an oxazoline group-containing compound, an oxazine group-containing compound, a carboxy group-containing compound and an amide group-containing compound, and more preferably an epoxy group-containing compound.

The functional group-containing compound preferably has a ratio of [weight-average molecular weight]/[functional group equivalent (unit of functional group equivalent: g/eq)] is 1 to 30, more preferably 1 to 10, even more preferably 1 to 6, and still more preferably 2 to 6. When the ratio of [weight-average molecular weight]/[functional group equivalent is the lower limit or more, the number of functional groups per molecule of the functional group-containing compound increases, and the effect of improving the affinity between the recycled carbon fiber and the thermoplastic resin is presumably increased due to the reaction with the functional group-containing compound. In contrast, when the ratio of [weight-average molecular weight]/[functional group equivalent is the upper limit or less, no excessive reaction thereof with the terminal carboxylic acid of the polyester resin occurs and the flowability of the resin composition thereby tends to be improved.

The functional group-containing compound preferably has a weight average-molecular weight of 15,000 or less, more preferably 10,000 or less, and even more preferably 5,000 or less. When the weight average-molecular weight is the above upper limit or less, the thermoplastic resin tends to be excellent in flowability. The lower limit of the weight average-molecular weight is preferably 100 or more, more preferably 200 or more, and even preferably 500 or more. When the weight average-molecular weight is the above lower limit or more, outgassing during melt heating can be suppressed at a lower level. The weight average-molecular weight of the functional group-containing compound is measured in terms of polystyrene by gel permeation chromatography (hereinafter referred to as "GPC").

The functional group equivalent of the functional group-containing compound is preferably 100 g/eq or more, more preferably 150 g/eq or more, and even more preferably 200 g/eq or more. The functional group equivalent of the functional group-containing compound is preferably 1,500 g/eq, more preferably 900 g/eq or less, and even more preferably 800 g/eq or less.

When the functional group equivalent is the above lower limit or more, the dispersion of the recycled carbon fiber is suppressed more effectively and the flowability of the resin composition during extrusion and molding tends to be improved. When the functional group equivalent is the above upper limit or less, hydrolysis resistance and weather resistance tend to be further improved.

<<Epoxy group-containing compound>>

The epoxy group-containing compound is a compound having one or more epoxy groups in one molecule, and includes a glycidyl compound, an aromatic ring-containing compound having one or more epoxy groups and an aliphatic compound having one or more epoxy groups. At least the aromatic ring-containing compound having one or more epoxy groups are preferably contained.

Specific examples of the epoxy group-containing compound include a bisphenol A type epoxy compound (including bisphenol A diglycidyl ether), a bisphenol F type epoxy compound (including bisphenol F diglycidyl ether), a biphenyl type epoxy compound (including bis(glycidyloxy)biphenyl), a resorcinol type epoxy compound (including resorcinol diglycidyl ether), a novolac type epoxy compound; an aromatic ring-containing compound such as glycidyl benzoate, diglycidyl terephthalate or diglycidyl orthophthalate; a (di)glycidyl ether such as methyl glycidyl ether, butyl glycidyl ether, 2-ethylhexyl glycidyl ether, decyl glycidyl ether, stearyl glycidyl ether, phenyl glycidyl ether, butylphenyl glycidyl ether, allyl glycidyl ether, neopentyl glycol diglycidyl ether, ethylene glycol diglycidyl ether, glycerin diglycidyl ether or propylene glycol diglycidyl ether; a paraffinic (such as saturated fatty acid-based) or olefinic (such as unsaturated fatty acid-based) (di)glycidyl ester such as glycidyl sorbate, diglycidyl adipate, epoxidized linseed oil or epoxidized soybean oil; an alicyclic epoxy compound such as vinylcyclohexene dioxide or dicyclopentadiene oxide; and an epoxy-modified styrene-acrylic copolymer.

Among them, a styrene-acrylic copolymer containing a glycidyl group(s) in its side chain, a bisphenol A type epoxy compound, a novolac type epoxy compound, a bisphenol F type epoxy compound, a biphenyl type epoxy compound and the like are preferred, and a bisphenol A type epoxy compound is more preferred.

«Carbodiimide compound»

The resin composition of the present embodiment also preferably comprises a carbodiimide compound as a reactive compound. The carbodiimide compound is a compound containing a carbodiimide group (-N=C=N-) in its molecule. The carbodiimide compound to be used can be any of an aliphatic carbodiimide compound having an aliphatic backbone, an alicyclic carbodiimide compound having an alicyclic backbone and an aromatic carbodiimide compound having an aromatic backbone. Among them, an aliphatic carbodiimide compound which has good reactivity with polymer terminals is preferably used. The carbodiimide compound may be either of monomer type or of polymer type, but a carbodiimide compound of polymer type is preferred in the present embodiment.

Examples of the aliphatic carbodiimide compound can include diisopropylcarbodiimide and dioctyldecylcarbodiimide. Examples of the alicyclic carbodiimide compound can include dicyclohexylcarbodiimide and poly(4,4'-dicyclohexylmethanecarbodiimide), and poly(4,4'-dicyclohexylmethanecarbodiimide) is particularly preferred.

Examples of the commercially available carbodiimide compound can include "CARBODILITE " (manufactured by Nisshinbo Chemical Inc.).

Examples of the aromatic carbodiimide compound include a mono- or dicarbodiimide compound such as diphenylcarbodiimide, di-2,6-dimethylphenylcarbodiimide, N-triyl-N'-phenylcarbodiimide, dip-nitrophenylcarbodiimide, di-p-aminophenylcarbodiimide, di-p-hydroxyphenylcarbodiimide, di-p -chlorophenylcarbodiimide, di-p-methoxyphenylcarbodiimide, di-3,4-dichlorophenylcarbodiimide, di-2,5-dichlorophenylcarbodiimide, di-o-chlorophenylcarbodiimide, p-phenylene-bis-di-o-triylcarbodiimide, p-phenylene-bis-dicyclohexylcarbodiimide, p-phenylene-bis-di-p-chlorophenylcarbodiimide or ethylene-bis-diphenylcarbodiimide; and a polycarbodiimide compound such as poly(4,4'-diphenylmethanecarbodiimide), poly(3,5'-dimethyl-4,4'-biphenylmethanecarbodiimide), poly(p-phenylenecarbodiimide), poly(m-phenylenecarbodiimide), poly(3, 5'-dimethyl-4,4'-diphenylmethanecarbodiimide), poly(naphthylenecarbodiimide), poly(1,3-diisopropylphenylenecarbodiimide), poly(1-methyl-3,5-diisopropylphenylenecarbodiimide), poly(1,3,5-triethylphenylenecarbodiimide) or poly(triisopropylphenylenecarbodiimide), and these can be used in combination of two or more thereof.

<<Oxazoline group-containing compound>>

Examples of the oxazoline group-containing compound include oxazoline, an alkyloxazoline (an alkyloxazoline having 1 to 4 carbon atoms such as 2-methyloxazoline or 2-ethyloxazoline) and a bisoxazoline compound.

Examples of the bisoxazoline compound include 2,2'-bis(2-oxazoline), a 2,2'-bis(alkyl-2-oxazoline) [a 2,2'-bis($C_1$-$C_6$ alkyl-2-oxazoline)-2-oxazoline such as 2,2'-bis(4-methyl-2-oxazoline), 2,2'-bis(4-ethyl-2-oxazoline) or 2,2'-bis(4,4-dimethyl-2-oxazoline), a 2,2'-bis(aryl-2-oxazoline) [such as 2,2'-bis(4-phenyl-2-oxazoline)], a 2,2'-bis(cycloalkyl-2-oxazoline) [such as 2,2'-bis(4-cyclohexyl-2-oxazoline)], a 2,2'-bis(aralkyl-2-oxazoline) [such as 2,2'-bis(4-benzyl-2-oxazoline)], a 2,2'-alkylenebis(2-oxazoline) [a 2,2'-$C_1$-$C_{10}$ alkylenebis(2-oxazoline) such as 2,2'-ethylenebis(2-oxazoline) or 2,2'-tetramethylenebis(2-oxazoline)], a 2,2'-alkylenebis(alkyl-2-oxazoline) [such as a 2,2'-$C_1$-$C_{10}$ alkylenebis($C_1$-$C_{10}$ alkyl-2-oxazoline) such as 2,2'-ethylenebis(4-methyl-2-oxazoline) or 2,2'-tetramethylenebis(4,4-dimethyl-2-oxazoline)], a 2,2'-arylenebis(2-oxazoline) [such as 2,2'-(1,3-phenylene)-bis(2-oxazoline), 2,2'-(1,4-phenylene)-bis(2-oxazoline), 2,2'-(1,2-phenylene)-bis(2-oxazoline) or 2,2'-diphenylenebis(2-oxazoline)], a 2,2'-arylenebis(alkyl-2-oxazoline) [such as a 2,2'-phenylene-bis($C_1$-$C_6$ alkyl-2-oxazoline) such as 2,2'-(1,3-phenylene)-bis(4-methyl-2-oxazoline) or 2,2'-(1,4-phenylene)-bis(4,4-dimethyl-2-oxazoline)], a 2,2'-aryloxyalkanebis(2-oxazoline) [such as 2,2'-9,9'-diphenoxyethanebis(2-oxazoline)], a 2,2'-cycloalkylenebis(2-oxazoline) [such as 2,2'-cyclohexylenebis(2-oxazoline)], an N,N'-alkylenebis(2-carbamoyl-2-oxazoline) [such as an N,N'-$C_1$-$C_{10}$ alkylenebis(2-carbamoyl-2-oxazoline) such as N,N'-ethylenebis(2-carbamoyl-2-oxazoline) or N,N'-tetramethylenebis(2-carbamoyl-2-oxazoline)], an N,N'-alkylenebis(2-carbamoyl-alkyl-2-oxazoline) [such as an N,N'-$C_1$-$C_{10}$ alkylenebis(2-carbamoyl-$C_1$-$C_6$ alkyl-2-oxazoline) such as N,N'-ethylenebis(2-carbamoyl-4-methyl-2-oxazoline) or N,N'-tetramethylenebis(2-carbamoyl-4,4-dimethyl-2-oxazoline)], and an N,N'-arylenebis(2-carbamoyl-2-oxazoline) [such as N,N'-phenylenebis(2-carbamoyl-oxazoline)].

The oxazoline group-containing compound include an oxazoline group-containing vinyl polymer (such as Epocross RPS series, RAS series or RMS series manufactured by NIPPON SHOKUBAI CO., LTD.) and the like. Among these oxazoline compound, a bisoxazoline compound is preferred.

<<Oxazine group-containing compound>>

The oxazine group-containing compound to be used can be an oxazine or bisoxazine compound.

Examples of the bisoxazine compound can include 2,2'-bis(5,6-dihydro-4H-1,3-oxazine), a 2,2'-bis(alkyl-5,6-dihydro-4H-1,3-oxazine) [such as 2,2'-bis($C_1$-$C_6$ alkyl-5,6-dihydro-4H-1,3-oxazine such as 2,2'-bis(4-methyl-5,6-dihydro-4H-1,3-oxazine), 2,2'-bis(4,4-dimethyl-5,6-dihydro-4H-1,3-oxazine) or 2,2'-bis(4,5-dimethyl-5,6-dihydro-4H-1,3-oxazine)], a 2,2'-alkylenebis(5,6-dihydro-4H-1,3-oxazine) [such as a 2,2'-$C_1$-$C_{10}$ alkylenebis(5,6-dihydro-4H-1,3-oxazine) such as 2,2'-methylenebis(5,6-dihydro-4H-1,3-oxazine), 2,2'- ethylenebis(5,6-dihydro-4H-1,3-oxazine) or 2,2'-hexanemethylenebis(5,6-dihydro-4H-1,3-oxazine), a 2,2'-arylenebis(5,6-dihydro-4H-1,3-oxazine)[such as 2,2'-(1,3-phenylene)-bis(5,6-dihydro-4H-1,3-oxazine), 2,2'-(1,4-phenylene)-bis(5,6-dihydro-4H-1,3-oxazine), 2,2'-(1,2-phenylene)-bis(5,6-dihydro-4H-1,3-oxazine), 2,2'-naphthylenebis(5,6-dihydro-4H-1,3-oxazine) or 2,2'-diphenylenebis(5,6-dihydro-4H-1,3-oxazine)], an N,N'-alkylenebis(2-carbamoyl-5,6-dihydro-4H-1,3-oxazine) [such as a N,N'-$C_1$-$C_{10}$ alkylenebis(2-carbamoyl-5,6-dihydro-4H-1,3-oxazine) such as N,N'-ethylenebis(2-carbamoyl-5,6-dihydro-4H-1,3-oxazine) or N,N'-tetramethylenebis(2-carbamoyl-5,6-dihydro-4H-1,3-oxazine), an N,N'-alkylenebis(2-carbamoyl-alkyl-5,6-dihydro-4H-1,3-oxazine) [such as an N,N'-$C_1$-$C_{10}$ alkylenebis(2-carbamoyl-$C_1$-$C_6$ alkyl-5,6-dihydro-4H-1,3-oxazine) such as N,N'-ethylenebis(2-carbamoyl-4-methyl-5,6-dihydro-4H-1,3-oxazine) or N,N'-hexamethylenebis(2-carbamoyl-4,4-dimethyl-5,6-dihydro-4H-1,3-oxazine)], and an N,N'-arylenebis(2-carbamoyl-5,6-dihydro-4H-1,3-oxazine) [such as N,N'-phenylenebis(2-carbamoyl-oxazine)]. Among these oxazine compounds, a bisoxazine compound is preferred.

<<Carboxy group-containing compounds

Examples of the carboxy group-containing compound (a carboxylic acid compound) can include formic acid, acetic acid, propionic acid, acrylic acid, methacrylic acid, oxalic acid, malonic acid, succinic acid, maleic acid, fumaric acid, adipic acid, benzoic acid, phthalic acid, terephthalic acid, lactic acid, malic acid, tartaric acid, diphenolic acid, benzenesulfonic acid, toluenesulfonic acid, dodecylbenzenesulfonic acid, nonylbenzenesulfonic acid, nitrobenzenesulfonic acid, cyanobenzenesulfonic acid, hydroxybenzenesulfonic acid, methylsulfonic acid, trifluoromethanesulfonic acid, trifluoroacetic acid, nitrobenzenecarboxylic acid, cyanobenzenecarboxylic acid, hydroxybenzenecarboxylic acid and hydroxyacetic acid, and salts thereof.

<Amide group-containing compound>

Examples of the amide group-containing compound can include (meth)acrylamide, N-methyl methacrylamide, methylolated acrylamide, methylolated methacrylamide, ureidovinyl ether, $\beta$-ureidoisobutyl vinyl ether and ureidoethyl acrylate.

The resin composition of the present embodiment comprises 0.1 parts by mass or more and preferably 0.2 parts by mass or more of the functional group-containing compound, with respect to 100 parts by mass of the thermoplastic resin. When the content of the functional group-containing compound is the above lower limit or more, the mechanical strength can be further improved. The upper limit of the functional group-containing compound is 15 parts by mass or less, preferably 12 parts by mass or less, more preferably 10 parts by mass or less, even more preferably 8 parts by mass or less, still more preferably 5 parts by mass or less, further more preferably 4 parts by mass or less, further more preferably 3 parts by mass or less and further more preferably 2.5 parts by mass or less. When the content of the functional group-containing compound is the above upper limit or less, a change in the viscosity and gelation acceleration, due to retention in an extruder, can be further reduced.

The resin composition of the present embodiment may comprise only one functional group-containing compound or two or more functional group-containing compounds. When the resin composition comprises two or more functional group-containing compounds, the total content is preferably within the above range.

<Other components>

The resin composition of the present embodiment may optionally comprise other components in addition to those described above as long as the desired physical properties are not significantly impaired. Examples of the other components include various resin additives. The resin composition may comprise one of the other components or any combination of two or more thereof at any ratio.

Specific examples of the other components include a stabilizer, a release agent, a pigment, a dye, a UV absorber, an antistatic agent, an anti-fogging agent, anti-blocking agent, a flowability improving agent, a plasticizer, a dispersant and an antimicrobial agent. The resin composition of the present embodiment preferably comprises at least one selected from the group consisting of a stabilizer, a release agent and a pigment.

The resin composition of the present embodiment is adjusted so that the total content of the thermoplastic resin, the recycled carbon fiber, the functional group-containing compound, and the other components optionally blended is 100% by mass. In the resin composition of the present embodiment, the total content of the thermoplastic resin, the recycled carbon fiber and the functional group-containing compound preferably accounts for 95% by mass or more of the resin composition. In the resin composition of the present embodiment, the total content of the thermoplastic resin, the recycled carbon fiber, the functional group-containing compound, a stabilizer, a release agent and a pigment preferably accounts for 99% by mass or more of the resin composition.

<<Stabilizer>>

The resin composition of the present embodiment may comprise a stabilizer. Examples of the stabilizer include a hindered phenol-based compound, a hindered amine-based compound, a phosphorus-based compound and a sulfur-based stabilizer. Among them, the hindered phenol-based compound is preferred.

For the stabilizer, reference can be specifically made to the description of paragraphs 0046 to 0057 of Japanese Patent Laid-Open No. 2018-070722, the description of paragraphs 0030 to 0037 of Japanese Patent Laid-Open No. 2019-056035 and the description of paragraphs 0066 to 0078 of International Publication No. WO 2017/038949, the contents of which are incorporated herein.

The resin composition of the present embodiment preferably comprises 0.01 parts by mass or more, more preferably 0.05 parts by mass or more and even more preferably 0.08 parts by mass or more of the stabilizer, with respect to 100 parts by mass of the thermoplastic resin. The upper limit of the content of the stabilizer is preferably 3 parts by mass or less, more preferably 1 part by mass or less, even more preferably 0.5 parts by mass or less and still more preferably 0.4 parts by mass or less, with respect to 100 parts by mass of the thermoplastic resin.

The resin composition of the present embodiment comprises only one stabilizer or two or more stabilizers. When the resin composition comprises two or more stabilizers, the total content is preferably within the above range.

<<Release agent>>

The resin composition of the present embodiment comprises a release agent.

As the release agent, a wide range of known release agents can be used, and an esterified product of an aliphatic carboxylic acid is preferred. The esterified product of an aliphatic carboxylic acid is preferably an esterified product of a polyhydric alcohol and an aliphatic carboxylic acid having 10 to 19 carbon atoms.

For the release agent, reference can be specifically made to the description of paragraphs 0063 to 0077 of Japanese Patent Laid-Open No. 2018-070722 and the description of paragraphs 0090 to 0098 of Japanese Patent Laid-Open No. 2019-123809, the contents of which are incorporated herein.

The resin composition of the present embodiment preferably comprises 0.01 parts by mass or more, more preferably 0.08 parts by mass or more and even more preferably 0.2 parts by mass or more of the release agent, with respect to 100 parts by mass of the thermoplastic resin. The upper limit of the content of the release agent is preferably 5 parts by mass or less, more preferably 3 parts by mass or less, even more preferably 1 part by mass or less and still more preferably 0.8 parts by mass or less, with respect to 100 parts by mass of the thermoplastic resin.

The resin composition may comprise only one release agent or two or more release agents. When the resin composition comprises two or more release agents, the total content is preferably within the above range.

<<Pigment and dye>>

The resin composition of the present embodiment may comprise a pigment and/or a dye depending on the application. The types of the pigment and the dye may be appropriately selected depending on the application. Specific examples include an inorganic pigment such as a black pigment such as carbon black (such as acetylene black, lamp black, thermal black, furnace black, channel black or ketjen black), a red pigment such as iron oxide red, an orange pigment such as molybdate orange, or a white pigment such as titanium oxide, and an organic pigment such as a yellow pigment, an orange pigment, a red pigment, a blue pigment or a green pigment.

The total amount of the dye and pigment in the resin composition of the present embodiment is preferably 0.01 to 5 parts by mass with respect to 100 parts by mass of the thermoplastic resin.

The resin composition of the present embodiment may comprise only one dye or pigment or two or more dyes or pigments. When the resin composition comprises two or more dyes or pigments, the total content is preferably within the above range.

<Physical properties of resin composition>

The resin composition of the present embodiment preferably has a smaller specific gravity. Specifically, the specific gravity is preferably 2.0 or less, more preferably 1.8 or less, even more preferably 1.6 or less, and still more preferably 1.4 or less. The lower limit of is not particularly specified, but it is practically above the specific gravity of the thermoplastic resin.

The resin composition of the present embodiment preferably has a higher melt volume rate (MVR) as measured at 250°C under a load of 5.00 kgf with accordance with JIS K7210. Specifically, the MVR is preferably 5 $cm^3$/10 min or more, more preferably 20 $cm^3$/10 min or more, even more preferably 30 $cm^3$/10 min or more, and still more preferably 35 $cm^3$/10 min or more. The upper limit of the MVR is not particularly specified, but it is practically, for example, 80 $cm^3$/10 min or less.

An ISO multi-purpose test specimen with a thickness of 4 mm obtained by molding the resin composition of the present embodiment preferably has a higher maximum flexural strength in accordance with ISO 178. Specifically, the maximum flexural strength is preferably 130 MPa or more, more preferably 150 MPa or more, even more preferably 170 MPa or more, still more preferably 175 MPa or more, and further more preferably 178 MPa or more. The upper limit of the maximum flexural strength is not particularly specified, but it is practically, for example, 300 MPa or less.

An ISO multi-purpose test specimen with a thickness of 4 mm obtained by molding the resin composition of the present embodiment preferably has a higher flexural modulus. Specifically, the flexural modulus is preferably 7,500 MPa or more, more preferably 8,000 MPa or more, and even more preferably 8,500 MPa or more. The upper limit of the maximum flexural strength is not particularly specified, but it is practically, for example, 20,000 MPa or less.

An ISO multi-purpose test specimen with a thickness of 4 mm obtained by molding the resin composition of the present embodiment preferably has a higher notched Charpy impact strength. Specifically, the notched Charpy impact strength is preferably 2.0 $kJ/m^2$ or more, more preferably 2.5 $kJ/m^2$ or more, and even more preferably 3.0 $kJ/m^2$ or more. The upper limit of the notched Charpy impact strength is not particularly specified, but it is practically, for example, 7.0 $kJ/m^2$ or less.

In particular, an ISO multi-purpose test specimen with a thickness of 4 mm obtained by molding the resin composition of the present embodiment preferably has a maximum flexural strength of 170 MPa or more, in accordance with ISO 178, and a Charpy impact strength of 3 $kJ/m^2$ or more.

In addition, for the resin composition of the present embodiment, the electromagnetic shielding performance is preferably 14 dB or more. The upper limit of the electromagnetic shielding performance is not particularly specified, it is practically 30 dB or less.

The above-described MVR, maximum flexural strength, flexural modulus, notched Charpy impact strength and electromagnetic shielding performance are measured according to the processes described in Examples below.

<Process for producing resin composition>

The resin composition of the present embodiment can be produced by any conventional process for producing a thermoplastic resin comprising a thermoplastic resin. For example, the resin composition of the present embodiment is produced by a process comprising: charging, into an extruder, 100 parts by mass of a thermoplastic resin, 10 to 70 parts by mass of a given recycled carbon fiber and 0.1 to 15 parts by mass (preferably 0.1 to 5 parts by mass) of a functional group-containing compound; and melt kneading them. The recycled carbon fiber may sometimes have no surface treatment agent and/or sizing agent deposited on the surface thereon. In contrast, in the present embodiment, the recycled carbon fiber is a baked product of a composite of an epoxy resin and a carbon fiber and a recycled carbon fiber comprising an epoxy resin-derived residue at a percentage of 5% by mass or more (preferably 10% by mass or more) and a functional group-containing compound are used, so that the epoxy resin-derived residue can serve as a surface treatment agent and/or a sizing agent, or the like and the functional group-containing compound can serve as a surface treatment agent for the recycled carbon fiber, or the like, enabling melt kneading via charging into an extruder. As a result, a pellet formed from the resin composition of the present embodiment can be provided.

Each of the components may be pre-blended together and then fed to an extruder all at once, or may be fed to the extruder via a feeder without pre-blending or after pre-blending some of the components. The extruder may be a single-screw extruder or a twin-screw extruder. In addition, some component(s) such as a dye or a pigment (such as carbon black) may be melt kneaded with a resin component to prepare a masterbatch and the remaining component(s) may be then blended therewith and be subjected to melt kneading.

The recycled carbon fiber is also preferably fed through a side feeder located in one place of a cylinder of an extruder. Side feeding enable it to keep, the length of the recycled carbon fiber in the resulting pellet and molded article, long and to effectively increase the resulting molded article in mechanical strength, particularly maximum flexural strength.

Accordingly, one preferred example of the process for the resin composition of the present embodiment is a process for producing a resin composition comprising, with respect to 100 parts by mass of a thermoplastic resin, 10 to 70 parts by mass of a recycled carbon fiber and 0.1 to 15 parts by mass of a functional group-containing compound; wherein the recycled carbon fiber is a baked product of a composite of an epoxy resin and a carbon fiber, and comprises 5% by mass or more of a residue derived from the epoxy resin; and the process comprising feeding the recycled carbon fiber through a side feeder located in one place of a cylinder of an extruder. The resin composition herein is preferably the resin composition of the present embodiment described above.

The heating temperature during melt-kneading can usually be appropriately selected from the range of 220 to 350°C.

One example of the resin composition of the present embodiment is a pellet. In the present embodiment, the number-average fiber length of a recycled carbon fiber in the pellet is preferably 100 $\mu$m or more, more preferably 130 $\mu$m or more, even more preferably 180 $\mu$m or more, and still more preferably 210 $\mu$m or more. The number-average fiber length of the recycled carbon fiber in the pellet is usually 500 $\mu$m but may be sufficiently applicable depending on the application, even if it is 450 $\mu$m or less, 400 $\mu$m or less, 350 $\mu$m or less or 320 $\mu$m or less.

In addition, when the resin composition is molded into a molded article in the form of an ISO test specimen having a thickness of 4 mm, the number-average fiber length of the recycled carbon fiber in the molded article preferably satisfies the above range.

The molded article of the present embodiment is formed form the resin composition of the present embodiment or the pellet of the present embodiment.

For the molded article of the present embodiment, the number-average fiber length of the recycled carbon fiber in the molded article (such as an injection molded article) is preferably 100 $\mu$m or more, more preferably 130 $\mu$m or more, even more preferably 180 $\mu$m or more, and still more preferably 210 $\mu$m or more. The number-average fiber length of the recycled carbon fiber in the molded article is usually 500 $\mu$m but may be sufficiently applicable depending on the application, even if it is 450 $\mu$m or less, 400 $\mu$m or less, 350 $\mu$m or less or 320 $\mu$m or less.

The molded article of the present embodiment is good in mechanical strength and electromagnetic shielding performance, and can be therefore preferably used in in various applications such as various storage containers, components of electrical and electronic devices, components of office automation (OA) devices, components of household electrical appliances, components of machinery mechanisms, components of vehicle mechanisms and components of automotive chassis, and is preferably used for components of automotive chassis.

In addition, the molded article of the present embodiment is excellent in flowability and can have the recycled carbon fiber efficiently dispersed therein in molds, so that it is suitable for injection molded articles.

<Process for producing molded article>

The process for producing a molded article is not particularly limited, and any molding process generally employed for a resin composition comprising a thermoplastic resin can be employed. Examples of the molding process include an injection molding process, an ultra-high speed injection molding process, an injection compression molding process, a two-color molding process, a hollow injection molding process such as a gas-assisted injection molding process, a molding process using heat insulation molds, a molding process using rapidly heated molds, a foam molding (including supercritical fluid) process, an insert molding process, an IMC molding process (in-mold coating molding process), an extrusion molding process, a sheet molding process, a thermoforming process, a rotational molding process, a laminate molding process, a press molding process and a blow molding process, and among them, an injection molding process is preferred.

For details of the injection molding process, reference can be made to paragraphs 0113 to 0116 of Japanese Patent No. 6183822, the contents of which are incorporated herein.

[Examples]

The present invention will be described more specifically with reference to Examples below. The materials, used amounts thereof, percentages thereof, processing details, processing procedures and the like shown in the following Examples can be changed as appropriate without departing from the subject matter of the present invention. Accordingly, the scope of the present invention is not intended to be limited to the specific examples shown below.

If the measuring devices and the like used in the Examples are discontinued and difficult to obtain, other devices having equivalent performance can be used for measurement.

1. Raw materials

The raw materials used are shown in Table 1 below.

[Table 1]

| Component | Symbol | |
|---|---|---|
| (A) Component Thermoplastic resin | a-1 | Polybutylene terephthalate resin<br>I V = 0 . 8 5 d L/g AV= 1 3 e q /t |
| | a-2 | Polyethylene terephthalate resin<br>"PBK1", manufactured by Japan Unipet Co. Ltd. I V = 0 . 6 4 d L/g |
| | a-3 | Acrylonitrile-styrene copolymer (AS resin)<br>"GR-At-R", manufactured by Denka Company Limited |
| (B) Component Recycled carbon fiber | b-1 | Recycled carbon fiber obtained by baking a composite of a PAN based-carbon fiber (number-average fiber length: 6 μm) and an epoxy resin<br>Resin residue: 13% by mass |
| | b-2 | Recycled carbon fiber obtained by baking a composite of a PAN based-carbon fiber (number-average fiber length: 6 μm) and an unsaturated polyester resin<br>Resin residue: 15% by mass |
| | b-3 | Recycled carbon fiber obtained by baking a composite of a PAN based-carbon fiber (number-average fiber length: 6 μm) and an epoxy resin<br>Resin residue: 3% by mass |
| (B)' Component Carbon fiber | b-x | PAN based-carbon fiber, virgin carbon fiber<br>Number-average fiber length: 6 μm |
| (C) Component Functional group containing compound | c-1 | Bisphenol A type epoxy compound<br>M w = 3 3 0 0 Epoxy equivalent: 7 0 0 g / e q<br>"jER 1003", manufactured by Mitsubishi Chemical Corporation |
| | c-2 | Bisphenol A type epoxy compound<br>M w = 3 7 0 Epoxy equivalent: 1 9 4 g / e q<br>"ADK CIZER EP-17", manufactured by ADEKA Corporation |
| | c-3 | Epoxy group-containing acrylic copolymer<br>M w = 6 7 0 0 Epoxy equivalent: 2 8 5 g / e q<br>"Joncryl ADR4368C", manufactured by BASF SE |
| | c-4 | Novolac type epoxy compound<br>M w = 3 3 0 0 Epoxy equivalent: 2 0 8 g / e q<br>"YDCN704", manufactured by NIPPON STEEL Chemical & Material CO., LTD. |
| Phenolic stabilizer | d-1 | Hindered phenol-based antioxidant<br>"AO-60", manufactured by ADEKA Corporation |
| Release agent | d-2 | Polyethylene oxide wax<br>"Licowax PED522", manufactured by Clariant AG |

(continued)

| Component | Symbol | |
|---|---|---|
| Carbon black MB | d-3 | Carbon black masterbatch<br>"RCB20-MB", manufactured by Mitsubishi Engineering-Plastics Corporation<br>Polybutylene terephthalate base/CB concentration: 19% by mass |
| | d-4 | Carbon black masterbatch<br>"EX 3531", manufactured by Nippon Pigment Company Limited<br>AS base/CB concentration: 50% by mass |

<Amount of residue>

The amount of residue of each recycled carbon fiber shown in Table 1 represents the amount of carbonized material in the recycled carbon fiber. That is, since the recycled carbon fiber to be used in the present invention is a baked product of a composite of an epoxy resin and a carbon fiber, the recycled carbon fiber comprises a residue (carbonized material) derived from the epoxy resin. The amount of the resin residue is a value obtained from the formula (1) by calculating the mass of the carbon fiber comprised in the carbon fiber-reinforced resin before heat treatment from the carbon fiber content. The unit is expressed in % by mass.

$$(B-A \times X)/(B) \times 100 \qquad \text{Equation 1}$$

A: Mass of the carbon fiber-reinforced resin before heat treatment
B: Mass of heat-treated material
X: Carbon fiber content of the carbon fiber-reinforced resin before heat treatment

<Measurement of functional group equivalent>

The functional group equivalent was measured according to JIS K7236. The unit was expressed in eq/g.

2. Examples 1 to 6 and Comparative Examples 1 to 6

<Production of resin composition (pellet)>

The components other than the recycled carbon fiber and the virgin carbon fiber, as shown in Table 2 or Table 3, were blended while stirring. Each component in Table 2 and Table 3 is expressed in parts by mass. The resulting blend was charged into a main hopper of a twin-screw extruder equipped with one vent, the recycled carbon fiber and virgin carbon fiber were fed through a side feeder, and they were kneaded under the temperature conditions of the melting temperature of the thermoplastic resin, a screw rotation speed of 250 rpm and a discharge amount of 200 kg/hour and then extruded into strands to obtain pellets of the resin composition.
In Comparative Example 3, the recycled carbon fiber could not be stably fed through the side feeder, so that the predetermined resin composition (pellet) could not be obtained.

<Productivity>

The productivity was evaluated based on whether or not pellets of the resin composition were obtained under conditions of a screw rotation speed of 250 rpm and a discharge amount of 200 kg/hour. The evaluation was made by a majority vote of five experts.

A: Pellets of the resin composition could be obtained.
B: Other than the above "A". For example, due to production problems, pellets of the resin composition could not be obtained, or the like.

<Specific gravity>

The specific gravity was measured in accordance with ISO 1183.

<Appearance>

The pellets obtained above were used for injection molding at a cylinder setting temperature of 260°C, a mold temperature of 80°C and an injection time of 1.0 second with an injection molding machine ("NEX-80", manufactured by NISSEI PLASTIC INDUSTRIAL CO., LTD.) to obtain flat test specimens of 100 mm × 100 mm × 2 mm (thickness). The glossiness (gloss) of each of these test specimens was measured under the condition of reflectance at angles of incidence and reflection of 60 degrees with a gloss meter ("VG-7000", manufactured by NIPPON DENSHOKU INDUSTRIES CO., LTD.) and was evaluated according to the following evaluation criteria.

S: Gloss of 50 or more
A: Gloss of less than 50

<MVR (250°C, 5.00 kgf), evaluation of flowability>

Melt volume rate (MVR) was measured at 250°C under a load of 5.00 kgf in accordance with ISO 1133. The unit was expressed in $cm^3$/10 min.
The evaluation of flowability was performed as follows:

A: MVR of 25 $cm^3$/10 min or more
B: MVR of 5 $cm^3$/10 min or more and less than 25 $cm^3$/10 min
C: MVR of less than 5 $cm^3$/10 min

<Maximum flexural strength and flexural modulus>

The pellets of the resin composition obtained above were dried at 120°C for 7 hours and then injection molded into ISO multi-purpose test specimens with a thickness of 4 mm with an injection molding machine ("J-85AD-60H", manufactured by The Japan Steel Works, Ltd.) in accordance with ISO 20753 and ISO 294-1.
The ISO flexural test specimens with a thickness of 4 mm obtained above were subjected to measurement of maximum flexural strength and flexural modulus with accordance with ISO 178 (unit: MPa) .

<Notched Charpy impact strength>

The ISO multi-purpose test specimens obtained above were subjected to measurement of notched Charpy impact strength at 23°C with accordance with ISO 179-1 and ISO 179-2. The unit was expressed in $kJ/m^2$.

<Evaluation of mechanical strength>

The mechanical strength was evaluated based on the above maximum flexural strength as follows:

A: Maximum flexural strength of 170 MPa or more
B: Other than the above "A"

<Electromagnetic shielding performance at 100 MHz>

The pellets obtained above were used for injection molding at a cylinder setting temperature of 260°C, a mold temperature of 80°C with an injection molding machine ("EC-160NII", manufactured by SHIBAURA MACHINE CO., LTD.) to obtain flat test specimens of 150 mm × 150 mm × 2 mm (thickness) . The obtained test specimens were subjected to measurement of electromagnetic shielding performance (unit: dB) at 100 MHz with an electromagnetic shielding performance measuring device conforming to the KEC method (according to KEC Electronic Industry Development Center).

A: Electromagnetic shielding performance of 14 dB or more
B: Electromagnetic shielding performance of less than 14 dB

<Carbon fiber length>

About 0.5 g of the pellet obtained as described above, or about 0.5 g of a sample, which was cut from the center of the ISO multi-purpose test specimen, was subjected to incineration in an electric furnace ("Electric muffle furnace KM-28", manufactured by Toyo Seisakusho Kaisha, Ltd.) at 500°C for 3 hours to burn only the thermoplastic resin component, followed by gently spreading and dispersing in an aqueous solution of a neutral surfactant with tweezers so as not to break the carbon fibers. The resulting aqueous dispersion solution was transferred onto a slide glass with pipettes, and photographed under a microscope at magnifications of 20 and 40 folds. One thousand to two thousand numbers of carbon fibers shown in the obtained photograph were subjected to measurement with an image analysis software ("Win-Loof"), and the weight-average value of the fiber length was taken as the carbon fiber length.

<Environmental suitability>

The environmental suitability was evaluated based on whether or not recycled raw materials were used.

A: Recycled raw materials used
B: Recycled raw materials not used

Comparative Example 7

All of the components shown in Table 3 were blended while stirring. The resulting blend was charged into a main hopper of a twin-screw extruder equipped with one vent, kneaded under the temperature conditions of the melting temperature of the thermoplastic resin, a screw rotation speed of 250 rpm and a discharge amount of 200 kg/hour and then extruded into strands to obtain pellets of the resin composition.
The rest of the procedure was performed in the same manner as in Example 1.

[Table 2]

| | Product Name | Unit | Example 1 | Example 2 | Example 3 |
|---|---|---|---|---|---|
| **Composition** | (a-1) PBT | Parts by mass | 100.00 | 100.00 | 100.00 |
| | (a-2) PET | | | | |
| | (a-3) AS | | | | |
| | (b-1) Recycled carbon fiber | | 13.61 | 31.50 | 13.42 |
| | (b-2) Recycled carbon fiber | | | | |
| | (b-3) Recycled carbon fiber | | | | |
| | (b-x) Carbon fiber | | | | |
| | (c-1) jER1003 | | 1.87 | 2.16 | |
| | (c-2) EP-17 | | | | 0.47 |
| | (c-3) joncryl ADR 4368C | | | | |
| | (c-4) YDCN704 | | | | |
| | (d-1) AO-60 (Stabilizer) | | 0.24 | 0.27 | 0.23 |
| | (d-2) PED522 (Release agent) | | 0.24 | 0.27 | 0.23 |
| | (d-3) RCB20-MB (Carbon black master batch) | | 2.37 | 2.74 | 2.33 |
| | (d-4) EX3531 (Carbon black master batch) | | | | |
| **Feature** | Amount of carbonized material in recycled carbon fiber | % by mass | 13 | 13 | 13 |
| **Evaluation** | Productivity | | A | A | A |
| | Specific gravity | | 1.35 | 1.38 | 1.35 |
| | Appearance | Evaluation | S | A | S |
| | MVR (250℃, 5.00kgf) | [cm$^3$/10min] | 66 | 38 | 60 |
| | Evaluation of flowability | Evaluation | A | A | A |
| | Maximum flexural strength | [MPa] | 182 | 239 | 180 |
| | Flexural modulus | [MPa] | 9000 | 15800 | 9000 |
| | Notched Charpy impact strength | [kJ/m$^2$] | 3 | 3.9 | 3.1 |
| | Evaluation of mechanical strength | Evaluation | A | A | A |
| | Electromagnetic shielding performance@100MHz | [dB] | 18 | 24 | 17 |
| | | Evaluation | A | A | A |
| | Carbon fiber length (pellet) | [μm] | 270 | 250 | 310 |
| | Carbon fiber length (test specimen) | [μm] | 240 | 230 | 280 |
| | Environmental suitability | Evaluation | A | A | A |

| | Product Name | Unit | Example 4 | Example 5 | Example 6 |
|---|---|---|---|---|---|
| Composition | (a-1) PBT | Parts by mass | 100.00 | 50.53 | 100 |
| | (a-2) PET | | | 19.97 | |
| | (a-3) AS | | | 29.50 | |
| | (b-1) Recycled carbon fiber | | 13.46 | 13.43 | 13.42 |
| | (b-2) Recycled carbon fiber | | | | |
| | (b-3) Recycled carbon fiber | | | | |
| | (b-x) Carbon fiber | | | | |
| | (c-1) jER1003 | | | | |
| | (c-2) EP-17 | | | | |
| | (c-3) joncryl ADR 4368C | | 0.78 | | |
| | (c-4) YDCN704 | | | 0.56 | 0.78 |
| | (d-1) AO-60 (Stabilizer) | | 0.23 | 0.23 | 0.23 |
| | (d-2) PED522 (Release agent) | | 0.23 | 0.23 | 0.23 |
| | (d-3) RCB20-MB (Carbon black master batch) | | 2.34 | | 2.33 |
| | (d-4) EX3531 (Carbon black master batch) | | | 2.34 | |
| Feature | Amount of carbonized material in recycled carbon fiber | % by mass | 13 | 13 | 13 |
| Evaluation | Productivity | | A | A | A |
| | Specific gravity | | 1.35 | 1.28 | 1.35 |
| | Appearance | Evaluation | S | S | S |
| | MVR (250℃, 5.00kgf) | [cm$^3$/10min] | 8 | 5 | 9 |
| | Evaluation of flowability | Evaluation | B | B | B |
| | Maximum flexural strength | [MPa] | 192 | 184 | 200 |
| | Flexural modulus | [MPa] | 9200 | 1000 | 9100 |
| | Notched Charpy impact strength | [kJ/m$^2$] | 3.5 | 2.5 | 3.4 |
| | Evaluation of mechanical strength | Evaluation | A | A | A |
| | Electromagnetic shielding performance@100MHz | [dB] | 14 | 14 | 15 |
| | | Evaluation | A | A | A |
| | Carbon fiber length (pellet) | [μm] | 340 | 240 | 200 |
| | Carbon fiber length (test specimen) | [μm] | 310 | 220 | 180 |
| | Environmental suitability | Evaluation | A | A | A |

[Table 3]

| | Product Name | Unit | Comparative Example 1 | Comparative Example 2 | Comparative Example 3 | Comparative Example 4 |
|---|---|---|---|---|---|---|
| Composition | (a-1) PBT | Parts by mass | 100.00 | 100.00 | 100.00 | 100.00 |
| | (a-2) PET | | | | | |
| | (a-3) AS | | | | | |
| | (b-1) Recycled carbon fiber | | | 13.35 | | |
| | (b-2) Recycledd carbon fiber | | 14.01 | | | |
| | (b-3) Recycled carbon fiber | | | | 11.63 | |
| | (b-x) Carbon fiber | | | | | 11.42 |
| | (c-1) jER1003 | | 1.88 | | 1.84 | |
| | (c-2) EP-17 | | | | | |
| | (c-3) joncryl ADR 4368C | | | | | |
| | (c-4) YDCN704 | | | | | |
| | (d-1) AO-60 (Stabilizer) | | 0.24 | 0.23 | 0.23 | 0.23 |
| | (d-2) PED522 (Release agent) | | 0.24 | 0.23 | 0.23 | 0.23 |
| | (d-3) RCB20-MB (Carbon black master batch) | | 2.37 | 2.32 | 2.33 | 2.28 |
| | (d-4) EX3531 (Carbon black master batch) | | | | | |
| Feature | Amount of carbonized material in recycled carbon fiber | % by mass | 15 | 13 | 3 | 0 |
| Evaluation | Productivity | | A | A | B | A |
| | Specific gravity | | 1.35 | 1.35 | - | 1.35 |
| | Appearance | Evaluation | S | S | - | S |
| | MVR (250℃, 5.00kgf) | [cm$^3$/10min] | 62 | 60 | | 91 |
| | Evaluation of flowability | Evaluation | A | A | - | A |
| | Maximum flexural strength | [MPa] | 150 | 165 | - | 186 |
| | Flexural modulus | [MPa] | 7000 | 8800 | - | 8000 |
| | Notched Charpy impact strength | [kJ/m$^2$] | 1.8 | 3.1 | - | 3.4 |
| | Evaluation of mechanical strength | Evaluation | B | B | - | A |
| | Electromagnetic shielding performance@100MHz | [dB] | 10 | 18 | - | 15 |
| | | Evaluation | B | A | - | A |
| | Carbon fiber length (pellet) | [μm] | 260 | 250 | | 250 |
| | Carbon fiber length (test specimen) | [μm] | 240 | 230 | | 230 |
| | Environmental suitability | Evaluation | A | A | - | B |

| | Product Name | Unit | Comparative Example 5 | Comparative Example 6 | Comparative Example 7 |
|---|---|---|---|---|---|
| Composition | (a-1) PBT | Parts by mass | 100.00 | 100.00 | 100 |
| | (a-2) PET | | | | |
| | (a-3) AS | | | | |
| | (b-1) Recycled carbon fiber | | 7.73 | 99.58 | |
| | (b-2) Recycledd carbon fiber | | | | |
| | (b-3) Recycled carbon fiber | | | | |
| | (b-x) Carbon fiber | | | | 13.42 |
| | (c-1) jER1003 | | 1.77 | 3.28 | |
| | (c-2) EP-17 | | | | |
| | (c-3) joncryl ADR 4368C | | | | |
| | (c-4) YDCN704 | | | | 0.78 |
| | (d-1) AO-60 (Stabilizer) | | 0.22 | 0.42 | 0.23 |
| | (d-2) PED522 (Release agent) | | 0.22 | 0.42 | 0.23 |
| | (d-3) RCB20-MB (Carbon black master batch) | | 2.24 | 4.16 | 2.33 |
| | (d-4) EX3531 (Carbon black master batch) | | | | |
| Feature | Amount of carbonized material in recycled carbon fiber | % by mass | 13 | 13 | 0 |
| Evaluation | Productivity | | A | B | |
| | Specific gravity | | 1.33 | 1.47 | 1.35 |
| | Appearance | Evaluation | S | A | S |
| | MVR (250℃, 5.00kgf) | [cm³/10min] | 112 | 23 | 10 |
| | Evaluation of flowability | Evaluation | A | B | B |
| | Maximum flexural strength | [MPa] | 144 | 253 | 123 |
| | Flexural modulus | [MPa] | 5800 | 31500 | 4800 |
| | Notched Charpy impact strength | [kJ/m²] | 2.2 | 4.3 | 2 |
| | Evaluation of mechanical strength | Evaluation | B | A | B |
| | Electromagnetic shielding performance@100MHz | [dB] | 9 | 39 | 14 |
| | | Evaluation | B | A | A |
| | Carbon fiber length (pellet) | [μm] | 240 | 350 | 80 |
| | Carbon fiber length (test specimen) | [μm] | 210 | 330 | 70 |
| | Environmental suitability | Evaluation | A | A | B |

As is clear from the above results, the resin composition of the present invention was excellent in productivity and high in mechanical strength (Examples 1 to 6). In addition, the resin composition of the present invention achieved low specific gravity, excellent appearance, excellent flowability, excellent electromagnetic shielding performance and excellent environmental suitability. In particular, the resin composition of the present invention had excellent performance close to that of Comparative Example 4 using a virgin carbon fiber.

In contrast, when the recycled carbon fiber used was other than the baked product of the composite of an epoxy resin and a carbon fiber (Comparative Example 1), the mechanical strength was inferior. The electromagnetic shielding performance was also inferior. When the functional group-containing compound was not blended (Comparative Example 2), the mechanical strength was inferior. When the recycled carbon fiber used comprised no residue (Comparative Example 3), the productivity was inferior. When the content of the recycled carbon fiber was less than 10 parts by mass with respect to 100 parts by mass of the thermoplastic resin (Comparative Example 5), the mechanical strength was inferior. When the content of the recycled carbon fiber was more than 70 parts by mass with respect to 100 parts by mass of the thermoplastic resin (Comparative Example 6), the productivity was inferior. When the procedure of Example 6 was repeated except that the recycled carbon fiber was changed to an equal amount of a virgin carbon fiber and the raw materials were added all at once (Comparative Example 7), the bending properties were significantly inferior. As a factor behind this, it was considered that the carbon fiber length in the pellets and molded products had been shortened.

**Claims**

1. A resin composition comprising, with respect to 100 parts by mass of a thermoplastic resin,

10 to 70 parts by mass of a recycled carbon fiber; and
0.1 to 15 parts by mass of a functional group-containing compound;
wherein the recycled carbon fiber is a baked product of a composite of an epoxy resin and a carbon fiber, and comprises 5% by mass or more of a residue derived from the epoxy resin; and
an ISO multi-purpose test specimen with a thickness of 4 mm obtained by molding the resin composition has a maximum flexural strength of 130 MPa or more in accordance with ISO 178.

2. The resin composition according to claim 1, wherein the content of the functional group-containing compound is 0.1 to 5 parts by mass with respect to 100 parts by mass of the thermoplastic resin.

3. The resin composition according to claim 1 or 2, wherein the recycled carbon fiber is a baked product of a composite of an epoxy resin and a carbon fiber, and comprises 10% by mass or more of a residue derived from the epoxy resin.

4. The resin composition according to claim 1,

wherein the content of the functional group-containing compound is 0.1 to 5 parts by mass with respect to 100 parts by mass of the thermoplastic resin;
the recycled carbon fiber is a baked product of a composite of an epoxy resin and a carbon fiber, and comprises 10% by mass or more of a residue derived from the epoxy resin; and
an ISO multi-purpose test specimen with a thickness of 4 mm obtained by molding the resin composition has a maximum flexural strength of 170 MPa or more in accordance with ISO 178.

5. The resin composition according to any one of claims 1 to 4, wherein the recycled carbon fiber comprises no less than 5% by mass and no more than 30% by mass of a residue derived from the epoxy resin.

6. The resin composition according to any one of claims 1 to 5, wherein the thermoplastic resin comprises at least one selected from the group consisting of a polyester resin, a polycarbonate resin and a styrenic resin.

7. The resin composition according to any one of claims 1 to 6, wherein the thermoplastic resin comprises a polybutylene terephthalate resin.

8. The resin composition according to any one of claims 1 to 7, wherein 30 to 100% by mass of the thermoplastic resin is a polybutylene terephthalate resin.

9. The resin composition according to any one of claims 1 to 8, wherein the functional group-containing compound comprises at least one selected from the group consisting of an epoxy group-containing compound, a carbodiimide compound, an oxazoline group-containing compound, an oxazine group-containing compound, a carboxy group-containing compound and an amide group-containing compound.

10. The resin composition according to any one of claims 1 to 9, wherein the functional group-containing compound comprises an epoxy group-containing compound.

11. The resin composition according to any one of claims 1 to 10, wherein the functional group-containing compound has a ratio of [weight-average molecular weight]/[functional group equivalent (unit of functional group equivalent: g/eq)] is 1 to 30.

12. The resin composition according to any one of claims 1 to 11, wherein the functional group-containing compound has a ratio of [weight-average molecular weight]/[functional group equivalent (unit of functional group equivalent: g/eq)] is 1 to 10.

13. The resin composition according to any one of claims 1 to 12, wherein the recycled carbon fiber comprises 25% by mass or less of a residue derived from the epoxy resin.

14. A pellet formed from the resin composition according to any one of claims 1 to 13.

15. The pellet according to claim 14, wherein the number-average fiber length of the recycled carbon fiber in the pellet is 100 to 500 $\mu$m.

16. A molded article formed from the resin composition according to any one of claims 1 to 13 or the pellet according to claim 14 or 15.

17. The molded article according to claim 16, which is an injection-molded article.

18. The molded article according to claim 17, wherein the number-average fiber length of the recycled carbon fiber in the molded article is 100 to 500 $\mu$m.

19. The molded article according to any one of claims 16 to 18, which is a component of automotive chassis.

20. A process for producing a resin composition comprising, with respect to 100 parts by mass of a thermoplastic resin:

   10 to 70 parts by mass of a recycled carbon fiber; and
   0.1 to 15 parts by mass of a functional group-containing compound;
   wherein the recycled carbon fiber is a baked product of a composite of an epoxy resin and a carbon fiber, and comprises 5% by mass or more of a residue derived from the epoxy resin; and
   wherein the process comprises feeding the recycled carbon fiber through a side feeder located in one place of a cylinder of an extruder.

21. The process according to claim 20, wherein the resin composition is a resin composition according to any one of claims 1 to 13.

## INTERNATIONAL SEARCH REPORT

| International application No. |
| --- |
| **PCT/JP2021/045107** |

**A.    CLASSIFICATION OF SUBJECT MATTER**

*C08K 7/04*(2006.01)i; *C08L 67/02*(2006.01)i; *C08L 101/00*(2006.01)i; *C08L 63/00*(2006.01)i
FI:    C08L101/00; C08K7/04; C08L67/02; C08L63/00

According to International Patent Classification (IPC) or to both national classification and IPC

**B.    FIELDS SEARCHED**

Minimum documentation searched (classification system followed by classification symbols)

C08K7/04; C08L67/02; C08L101/00; C08L63/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-2125 A (TORAY INDUSTRIES) 05 January 2017 (2017-01-05)<br>entire text, all drawings | 1-21 |
| A | JP 2018-58947 A (JSR CORP) 12 April 2018 (2018-04-12)<br>entire text | 1-21 |
| A | WO 2018/101022 A1 (JSR CORP) 07 June 2018 (2018-06-07)<br>entire text | 1-21 |
| A | JP 2018-185971 A (UNIV GIFU) 22 November 2018 (2018-11-22)<br>entire text, all drawings | 1-21 |
| A | WO 2018/212016 A1 (SHINRYO CORP) 22 November 2018 (2018-11-22)<br>entire text, all drawings | 1-21 |
| A | JP 2019-136932 A (AI CARBON CO LTD) 22 August 2019 (2019-08-22)<br>entire text, all drawings | 1-21 |
| A | JP 2019-155634 A (MITSUBISHI HEAVY IND LTD) 19 September 2019 (2019-09-19)<br>entire text, all drawings | 1-21 |

☑ Further documents are listed in the continuation of Box C.          ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **02 February 2022** | **22 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/045107**

### C.    DOCUMENTS CONSIDERED TO BE RELEVANT

| Category* | Citation of document, with indication, where appropriate, of the relevant passages | Relevant to claim No. |
|---|---|---|
| A | JP 2019-163354 A (TAKAROKU SHOJI KK) 26 September 2019 (2019-09-26)<br>entire text | 1-21 |
| A | JP 2020-62573 A (SHINRYO CORP) 23 April 2020 (2020-04-23)<br>entire text, all drawings | 1-21 |
| E, A | JP 2022-15366 A (TOYOTA JIDOSHA KABUSHIKI KAISHA) 21 January 2022<br>(2022-01-21)<br>entire text, all drawings | 1-21 |

Form PCT/ISA/210 (second sheet) (January 2015)

**INTERNATIONAL SEARCH REPORT**
Information on patent family members

International application No.

**PCT/JP2021/045107**

| Patent document cited in search report | | | Publication date (day/month/year) | Patent family member(s) | | | Publication date (day/month/year) |
|---|---|---|---|---|---|---|---|
| JP | 2017-2125 | A | 05 January 2017 | (Family: none) | | | |
| JP | 2018-58947 | A | 12 April 2018 | (Family: none) | | | |
| WO | 2018/101022 | A1 | 07 June 2018 | US entire text CN | 2020/0339768 109996836 | A1 A | |
| JP | 2018-185971 | A | 22 November 2018 | (Family: none) | | | |
| WO | 2018/212016 | A1 | 22 November 2018 | US entire text, all drawings EP CN TW | 2020/0079918 3626769 110678507 201900747 | A1 A1 A A | |
| JP | 2019-136932 | A | 22 August 2019 | US entire text, all drawings | 2019/0283279 | A1 | |
| JP | 2019-155634 | A | 19 September 2019 | (Family: none) | | | |
| JP | 2019-163354 | A | 26 September 2019 | (Family: none) | | | |
| JP | 2020-62573 | A | 23 April 2020 | (Family: none) | | | |
| JP | 2022-15366 | A | 21 January 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51109056 A
- JP 2016041800 A
- WO 2018212016 A
- JP 2018070722 A
- JP 2019056035 A
- WO 2017038949 A
- JP 2019123809 A
- JP 6183822 B